# EUROPEAN PATENT SPECIFICATION

(11) **EP 2 008 546 B1**
(45) Date of publication and mention of the grant of the patent: **24.08.2016**
(21) Application number: 08104346.5
(22) Date of filing: 10.06.2008
(51) Int. Cl.: A47B 49/00, F16M 11/18, G08C 17/02, G08C 21/00

(54) **A user-friendly TV stand rotating mechanism and method**
Benutzerfreundlicher Fernsehständerdrehmechanismus und Verfahren
Mécanisme de rotation de support de TV convivial et procédé

(30) Priority: 29.06.2007 TR 200704549
(43) Date of publication of application: 31.12.2008
(73) Proprietor: Vestel Elektronik Sanayi ve Ticaret A.S., 45030 Manisa (TR)
(72) Inventor: Boran, Baris, 45030, MANISA (TR)
(74) Representative: Cayli, Hülya

(56) References cited:
- WO-A-02/071315
- GB-A- 2 343 760
- JP-A- 7 147 656
- US-A- 5 250 888
- US-A1- 2003 058 372
- US-A1- 2005 179 618
- US-A1- 2006 171 705

## Description

### Field of the Invention

The present invention relates to a system and method to easily rotate a TV stand in a three dimensional space in order to get over problems arising from position of the user, especially encountered with LCD televisions due to their limited viewing angles.

### The Prior Art

In the first days of the screen technology, viewers were seriously suffering from the view quality loss they encountered when they change position. In the first LCD screen technologies viewing angle was less than 140 degrees and the perceived view quality was limited on every direction except vertical viewing angle.

Besides the technological improvement studies made to solve this problem, rotating TV stands that were designed to basically turn manually or by a motorized system were developed.

In some older systems that have a motor allowing rotation of the TV system, users had the opportunity to accomplish this turning action by a remote control that have basically 2 or more control buttons which determine the desired turning direction.

Patent document US5287210 discloses a TV stand rotating mechanism that can be turned right and left by user commands. In the state of the art, according to this system, the user first determines the position relative to the TV stand mechanism by a remote control that emits infrared waves and this invention records the infrared waves to its memory. TV stand mechanism turns according to the infrared waves stored while the invention was working. When the received waves match the waves stored in the memory the turning mechanism of the invention turns in that direction.

Japanese patent application with publication number JP 07 147656 discloses a system for a TV receiver is combined with a receiver stage containing a rotary function and receives the infrared and ultrasonic signals from a remote control. The invention consists of ultrasonic reception part which includes three receivers and the one infrared receive section in front of the receiver. After these parts receive the two signals, the screen of the display port is adjusted so that the viewer can watch the screen from the front. The position is detected by the one infrared receive section and the 1^{st} to 3^{rd} three ultrasonic reception parts are provided in the transverse plane at the receiving set. Horizontal distance is measured by the 1^{st} and 2^{nd} ultrasonic reception parts which were arranged horizontally. And vertical distance is measured by the 1^{st} and 3^{rd} ultrasonic parts which were put in order to perpendicularly.
Also patent document with publication number US 2005/179618 discloses a system for adjusting the viewing angle of the monitor corresponding to the movement of the viewer. This system has a support arm which involves four motors that they provide to rotate the monitor. The application of this method can have two different ways. If the processor is in the support arm, then the remote control sent the input data from viewer to the receptor to efficiently rotate the motors by using control button on the remote control. The other way is that if the procesor is in a remote control, then the processor sent the input data from viewer as a control signal to the receptor to rotate the motors. Since this system do not work with three sensors, it can not provide the estimation position in a three dimension.

The systems in the known state of the technique have troublesome working principles; it is demanded from the user all the time to define their position relative to the TV system and turning of the TV stand to defined directions usually take a long time and it is far from being user-friendly.

In the state of the art, systems also do not sufficiently turn according to the exact position of the user and require a series of commands (turning left, up and down etc.) from the user to calibrate the TV stand in order to align his/her viewing angle with the screen angle of the TV.

### The Object of the Invention

The object of the present invention is to manufacture a user-friendly TV set including a TV stand that can detect the position of the user and that can turn the screen of the TV set in the three dimensional space according to this detection with a single command in order to align with the user interface position.

### Brief Description of the Figures

Figure 1 : General view of a preferred structure of the invention.
Figure 2 : Shows the position of the user relative to the TV screen interface.
Figure 3 : Shows the positions of the user and the TV set.
Figure 4 : Shows the position of the TV set aligned according to the screen position of the user.

The parts in the figures are given reference numbers and these numbers are given below.
Sensors that can receive the RF signals (1), (2), (3)
Turning mechanism (4)
Viewing angle of the user (5), (6), (7)

### Detailed Description of the Invention

Due to the nature of the screen equipment, rotating TV stands have a common usage in CRT and LCD television sets in order to align the viewing angle of the user with the screen interface. The main function of the rotating TV stands is to align the screen angle of the TV with the viewing angle of the user in order to maximize the view quality of the perceived image.

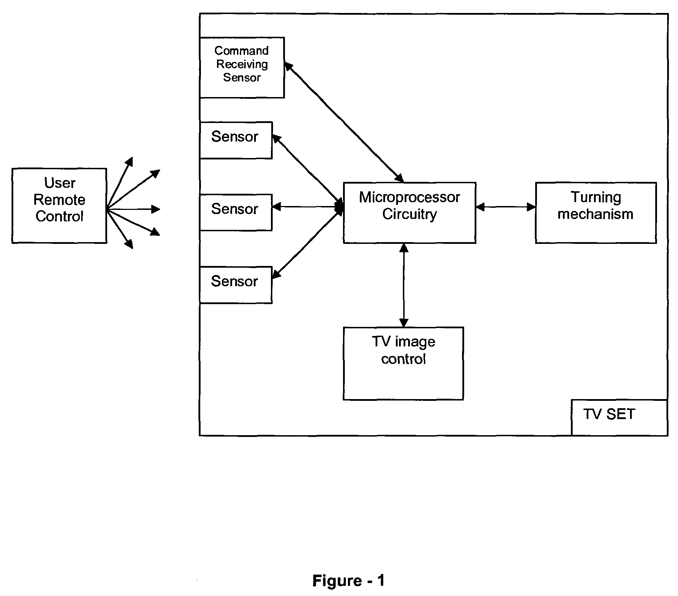

The preferred configuration of the present invention shown in Figure 1 comprises a combination of a remote control (this romote control can also run the TV set), sensors included in the TV set (receives the signal or signals transmitted from the remote control) and a TV set turning mechanism that can turn vertically and horizontally. After RF signals coming from the remote control are detected by the sensors (1, 2, 3) in the invention, the detected signals are compared by a comparison mechanism included in the present invention.

According to the comparison results of the amplitudes of the RF signals received by the sensors (1, 2, 3), the present invention detects the position of the user and this procedure is performed logically according to this idea: the power rates of the signals received by the sensors (1, 2, 3) are compared with each other for the same transmitted signal and it is assumed that the user is closest to the sensor giving the biggest power level and furthermost to the sensor giving the lowest power level. The reason why at least three sensors are selected is to create a three dimensional space to detect the position of the user not only at the vertical dimension but also at the horizontal dimension.

After comparison of the power levels received by the sensors (1, 2, 3), the present invention relates to a reference table created before in order to define which direction the TV set should turn. The aim of using the reference table during evaluation of the detected and compared signals is to determine which direction and how much the motor arrangement will turn according to the detected and compared signal power values. Said reference table may have been created by the manufacturer, by this way the turning process may be performed in cooperation with the microprocessor according to the detected signal power rates, and the reference table increases the efficiency of the invention.

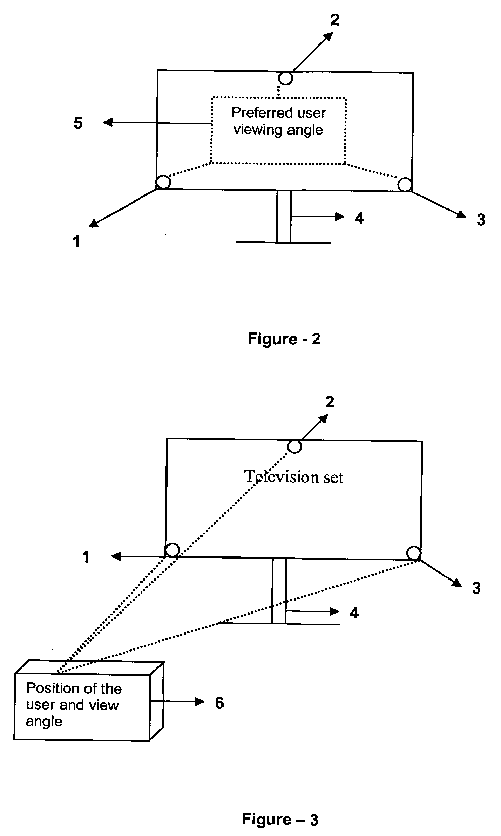

The reason of using transmitters and sensors that can receive and transmit RF signals is that it is almost impossible to evaluate the signal power in infrared transmitter systems even though most of the TV sets utilize infrared transmitter systems (like RC5). It is possible to use a transmitter - receiver combination in this invention that can detect the position of the user in three dimensional space. The preferred configuration of the invention is shown in Figure 1 and the preferred working principle is shown in Figures 2, 3 and 4.

In Figure 2, the position of an inactive user is showed where the viewing angle of the user is aligned with the television screen.

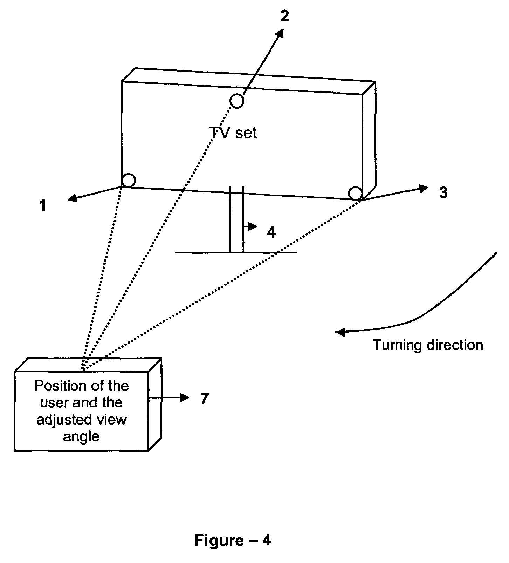

In Figure 3, the position of the user relative to the TV screen is showed; here the user is at left and below relative to the TV set; at this point the user aligns his own position with the TV screen by pressing a button and the remote control of the invention transmits an RF signal that can be received by the sensors (1, 2, 3). The signals received by the sensors (1, 2 and 3) are compared with each other. In Figure 3 according to this example, since the sensor with reference number "1" is the sensor closest to the user, the power of the RF signal received by sensor with reference number "1" is bigger than the others. The result obtained after evaluation of powers of RF signals received by the sensors (1, 2 and 3) is compared with the reference table and the related turn command is transmitted to the turning mechanism. In Figure 4, after needed procedures are performed, by only pushing a single button of the remote control, it is showed that the TV set turns to left and downward according to the position of the user.

The present invention can be applied not only to LCD television sets but also at the same time to CRT television sets and to other screen systems that have a turning mechanism.

## Claims

1. A system for a TV set including a motorized television stand that can turn according to the three dimensional position of the user and a remote control device that can transmit RF signals and a microprocessor circuit intended to control the turning television stand; comprising;
- at least three sensors that are positioned separate from each other which can receive the signals emitted by the said remote control device, wherein said microprocessor circuit can detect the position of the user by comparing the power levels of the signals received by the said sensors;
- at least one motor allowing the said stand to move vertically and horizontally to turn the said rotating television stand according to the estimated position of the user
**characterized in that** said system further comprises
- a reference table for assuming the position of the user and for determining how much and to which direction the said motor will turn according to the result of the comparison of the power level of the signals received by said sensors using the microprocessor circuit aimed for detecting the position of the user.

2. A system according to Claim 1 **characterized in that** said reference table is prepared by the manufacturer.

3. A method for a TV set including a motorized television stand that can turn according to the three dimensional position of the user, which includes the steps of
- sending a signal from the location of the user by a remote control device that can send RF signals
- detection of the signals sent from the said remote control by the at least three sensors located on the TV;
- transfer of the amplitudes of the signals detected by the said sensors to a comparison unit;
- comparing the amplitudes of the signals detected by the said sensors in said comparison unit;
**characterized in that** said method further comprises the steps of;
- estimating of the position of the user using a reference table according to result of said comparison;
- giving the required movement commands to the motor that can move the TV stand vertically and horizontally depending on the said estimation.

4. A method according to Claim 3 **characterized in that** the said comparison unit decides that;
- the user is further from the sensor with the lower signal value, and
- the user is closer to the sensor with the stronger signal value.

## Patentansprüche

1. **System** für ein TV-Set mit einem motorisierten TV-Fuß oder -Ständer, der sich zu drehen vermag, entsprechend der dreidimensionalen Position des Benutzers und mit einer Fernbedienung, die HF-Signale auszusenden vermag und mit einer Mikroprozessor-Schaltung, die vorgesehen oder beabsichtigt ist, den drehbaren TV- Fuß zu steuern, umfassend
- zumindest drei Sensoren, die separat zueinander angeordnet sind und die von der Fernbedienung ausgesandten Signale empfangen können, wobei die Mikroprozessor-Schaltung die Position des Benutzers erfassen kann, indem sie die Stärke der durch die Sensoren empfangenen Signale vergleicht;
- wenigstens einem Motor, der es ermöglicht, den drehbaren Fuß vertikal zu bewegen und horizontal zu drehen, entsprechend der geschätzten Position des Benutzers zu,
**dadurch gekennzeichnet, dass** das System weiterhin umfasst
- einen Bezugstisch, mit dem die Position des Benutzers annehmbar oder abschätzbar ist und mit dem bestimmbar ist, wie viel und in welche Richtung der Motor aufgrund der Ergebnisse des Vergleichs der von den Sensoren empfangenen Signalstärken mittels des Microprozessorschaltkreises drehen wird, mit dem Ziel die Position des Benutzers zu erkennen oder zu erfassen.

2. System nach Anspruch 1, **dadurch gekennzeichnet, dass** der Bezugstisch durch den Hersteller vorbereitet wird.

3. **Verfahren** für ein TV-Set mit einem motorisierten TV-Fuß oder -Ständer, der sich entsprechend einer dreidimensionalen Position des Benutzers drehen kann, und welches die folgenden Schritte aufweist
Senden eines Signals von der Position des Benutzers mit einer Fernsteuerung, die HF-Signale senden kann;
Aufnehmen der von der Fernsteuerung gesendeten Signale von wenigstens drei Sensoren, die an dem TV angeordnet sind; Übertragen der Amplituden der von den Sensoren aufgenommenen Signale zu einer Vergleichseinheit;
Vergleichen der Amplituden der von den Sensoren aufgenommenen Signale in der Vergleichseinheit;
**dadurch gekennzeichnet, dass** das Verfahren weiterhin die Schritte umfasst:
Abschätzen der Position des Benutzers unter Zuhilfenahme eines Bezugstisches, entsprechend der Ergebnisse des Vergleichs; Abgeben der notwendigen Bewegungsbefehle an den Motor, der den TV-Fuß in Abhängigkeit von der Abschätzung vertikal und horizontal bewegen kann.

4. Verfahren nach Anspruch 3, **dadurch gekennzeichnet, dass** die Vergleichseinheit entscheidet, dass
der Benutzer von dem Sensor mit einem schwächeren Signalwert weiter entfernt ist, und
der Benutzer näher an einem Sensor mit einem stärkeren Signalwert ist.

## Revendications

1. Système pour un poste de télévision comprenant un support de télévision motorisé qui est capable de tourner en fonction de la position en trois dimensions de l'utilisateur, et un dispositif de télécommande qui est capable de transmettre des signaux de radiofréquence et un circuit de microprocesseur destiné à commander le support de télévision tournant, comprenant:
- au moins trois capteurs qui sont positionnés séparément les uns des autres et qui sont capables de recevoir les signaux émis par ledit dispositif de télécommande, dans lequel ledit circuit de microprocesseur est capable de détecter la position de l'utilisateur en comparant les niveaux de puissance des signaux reçus par lesdits capteurs;
- au moins un moteur qui permet audit support de se déplacer verticalement et horizontalement afin de tourner le support de télévision en fonction de la position estimée de l'utilisateur,
**caractérisé en ce que** ledit système comprend en outre:
- une table de référence pour adopter la position de l'utilisateur et pour déterminer dans quelle mesure et dans quelle direction ledit moteur tournera en fonction du résultat de la comparaison du niveau de puissance des signaux reçus par lesdits capteurs en utilisant le circuit de microprocesseur qui a pour but de détecter la position de l'utilisateur.

2. Système selon la revendication 1, **caractérisé en ce que** ladite table de référence est préparée par le fabricant.

3. Procédé pour un poste de télévision comprenant un support de télévision motorisé qui est capable de tourner en fonction de la position en trois dimensions de l'utilisateur, comprenant les étapes suivantes:
- envoyer un signal à partir de la position de l'utilisateur à l'aide d'un dispositif de télécommande capable d'envoyer des signaux de radiofréquence;
- détecter les signaux envoyés à partir de ladite télécommande à l'aide desdits au moins trois capteurs disposés sur la télévision;
- transférer les amplitudes des signaux détectés par lesdits capteurs à une unité de comparaison; et
- comparer les amplitudes des signaux détectés par lesdits capteurs dans ladite unité de comparaison,
**caractérisé en ce que** ledit procédé comprend en outre les étapes suivantes:
- estimer la position de l'utilisateur en utilisant une table de référence en fonction du résultat de ladite comparaison; et
- transmettre les commandes de déplacement requises au moteur qui est capable de déplacer le support de télévision verticalement et horizontalement sur la base de ladite estimation.

4. Procédé selon la revendication 3, **caractérisé en ce que** ladite unité de comparaison décide que:
- l'utilisateur est plus loin du capteur qui présente la valeur de signal inférieure; et
- l'utilisateur est plus près du capteur qui présente la valeur de signal la plus forte.
